# EUROPEAN PATENT APPLICATION

(11) **EP 4 625 684 A1**
(43) Date of publication of application: **01.10.2025**
(21) Application number: 24829724.4
(22) Date of filing: 10.01.2024
(51) Int. Cl.: H01M 50/593

(54) **BATTERY AND ELECTRIC DEVICE**

(30) Priority: 28.06.2023 CN 202310776824
(71) Applicant: Contemporary Amperex Technology Co., Limited, Ningde, Fujian 352100 (CN)
(72) Inventor: YUAN, Shenggang, Ningde, Fujian 352100 (CN); WANG, Zengzhong, Ningde, Fujian 352100 (CN); NIU, Jianxin, Ningde, Fujian 352100 (CN); WANG, Peng, Ningde, Fujian 352100 (CN); SUN, Zhanyu, Ningde, Fujian 352100 (CN); ZHAO, Peijie, Ningde, Fujian 352100 (CN); KE, Qingpeng, Ningde, Fujian 352100 (CN); GAN, Weifeng, Ningde, Fujian 352100 (CN); YAN, Xin, Ningde, Fujian 352100 (CN)
(74) Representative: Ziebig Hengelhaupt Intellectual Property Attorneys Patentanwaltskanzlei PartGmbB
(86) International application number: PCT/CN2024/071629
(87) International publication number: WO 2025/001061

(57) **Abstract**

Provided in the embodiments of the present application are a battery and an electric device. The reliability of the battery can be improved. The battery includes a plurality of battery cells, the plurality of battery cells are arranged in a matrix along a first direction and a second direction, the first direction being perpendicular to the second direction; and an insulating member, including a first insulating portion extending along the first direction and a second insulating portion extending along the second direction, the first insulating portion is fixedly connected to the plurality of battery cells arranged along the first direction, and the second insulating portion is fixedly connected to the plurality of battery cells arranged along the second direction.

## Description

The present application claims priority to Chinese Patent Application No. 202310776824.7 entitled "Battery and Electric Device" filed on June 28, 2023, which is incorporated herein by reference in its entirety.

### TECHNICAL FIELD

The present application relates to the field of batteries, and more particularly, to a battery and an electric device.

### BACKGROUND

Energy conservation and emission reduction are key to sustainable development of the automotive industry. In this case, electric vehicles have become an important component of the sustainable development of the automotive industry due to advantages thereof in energy efficiency and environmental protection. For electric vehicles, a battery technology is an important factor regarding the development thereof.

With the development of battery technology, various performance of batteries is continuously improved, wherein the reliability of batteries is particularly important. If the reliability of the battery is too low, the battery cannot be used. Therefore, to improve the reliability of the battery is still a problem that needs to be solved.

### SUMMARY

Embodiments of the present application provide a battery and an electric device, so that the reliability of the battery may be improved.

In a first aspect, provided is a battery, including: a plurality of battery cells arranged in a matrix along a first direction and a second direction, the first direction being perpendicular to the second direction; and an insulating member, including a first insulating portion extending along the first direction and a second insulating portion extending along the second direction, the first insulating portion being fixedly connected to the plurality of battery cells arranged along the first direction and the second insulating portion being fixedly connected to the plurality of battery cells arranged along the second direction.

The insulating member may occupy a certain space on the surface of the battery cell to separate the battery cell from other components of the battery, so that the battery cell is unlikely to be in contact with other components of the battery, thereby reducing the risk of a short circuit of the battery cell and improving the reliability of the battery. The first insulating portion and the second insulating portion arranged in a cross manner along the first direction and the second direction also can play a good supporting role, so that the battery is unlikely to be damaged by an external force. Meanwhile, the first insulating portion and the second insulating portion in the insulating member can fix the plurality of battery cells in the first direction and the second direction, respectively, so that the plurality of battery cells form a whole, and the overall rigidity and mechanical strength of the battery can be improved, thereby improving the reliability of the battery and prolonging the service life thereof.

In some embodiments, the first insulating portion is fixedly connected to two adjacent battery cells arranged along the second direction, and/or the second insulating portion is fixedly connected to two adjacent battery cells arranged along the first direction.

The first insulating portion and/or the second insulating portion can be fixedly connected to more battery cells at the same time, so that a connection among the plurality of battery cells can be more stable, so that the overall rigidity of the battery can be further improved. This may also reduce the number of the first insulating portion and the second insulating portion, which contributes to saving the manufacturing cost of the insulating member.

In some embodiments, the first insulating portion and the second insulating portion are fixedly connected.

This may make the structure of the insulating member more stable and unlikely to move relatively, which contributes to providing good insulating performance for the battery. At the same time, the first insulating portion and the second insulating portion are fixedly connected as a whole, which contributes to simplifying the assembly process and improving the production efficiency.

In some embodiments, the first insulating portion is provided with a first groove, and the first groove is clamped with the second insulating portion, and/or the second insulating portion is provided with a second groove, and the second groove is clamped with the first insulating portion.

By connecting the first insulating portion and the second insulating portion in a clamping manner, the assembly of the two may be more flexible, the positions of the first insulating portion and the second insulating portion can be adjusted according to the actual situation, and in the case of damage to the first insulating portion or the second insulating portion, only the damaged insulating portion can be replaced without replacing the entire insulating member, so that the loss in the production process may be reduced.

In some embodiments, the insulating member is of an integrally molded structure.

As a result, the connection strength between the first insulating portion and the second insulating portion can be increased, so that the first insulating portion and the second insulating portion are unlikely to be separated from each other, the connection strength between the first insulating portion and the second insulating portion and the battery cell can be increased, and the overall rigidity of the battery can be increased.

In some embodiments, the insulating member includes a connecting portion, configured to connect the first insulating portion and the second insulating portion on a plane formed by the first direction and the second direction.

The connecting portion may improve the strength and stability of the insulating member, increase the cover area of the insulating member on the battery cell, and achieve insulation in a wider range, so that the insulation effect of the insulating member is further improved.

In some embodiments, the battery cell includes an electrode terminal, the connecting portion is provided with a first through hole, and the first through hole is configured to avoid the electrode terminal.

The first through hole can reduce interference between the electrode terminal and the insulating member, so that the electrode terminal can be connected to the bus bar component to achieve an electrical connection among different battery cells. At the same time, the mutual fit between the first through hole and the electrode terminal can also play a role in positioning the insulating member in the battery, which contributes to improving the accuracy of the mounting position of the insulating member.

In some embodiments, a first blocking portion is arranged around the first through hole, and the first blocking portion protrudes from a surface of the insulating member facing the battery cell.

The first blocking portion may reduce the probability that an adhesive material attached to the surface of the connecting portion is in contact with the electrode terminal, and thus can reduce the influence of the adhesive material on the connection between the bus bar component and the electrode terminal. At the same time, the first blocking portion can play a certain role in blocking solid particles, particularly, metal particles, and thus, the probability of a short circuit of the battery can be reduced, and the reliability of the battery can be improved.

In some embodiments, the first blocking portion abuts against a surface of the battery cell facing the insulating member.

As a result, the sealing effect of the first blocking portion on the surrounding area of the first through hole may be improved to further block the adhesive material or the solid particles, so that the influence of the adhesive material on the connection between the bus bar component and the electrode terminal is reduced, and at the same time, the solid particles, particularly the metal particles, can be further blocked, so that the probability of the short circuit of the battery can be reduced, and the reliability of the battery can be improved.

In some embodiments, the insulating member includes a bus bar component, the bus bar component corresponds to two adjacent first through holes, and the two adjacent first through holes correspond to electrode terminals of different battery cells, respectively.

The bus bar component is connected to the electrode terminal through the first through hole, so that an electrical connection between the plurality of battery cells can be achieved without affecting the insulation performance between the battery cells and other portions of the battery.

In some embodiments, a surface of the insulating member away from the battery cell at least partially protrudes from a surface of the bus bar component away from the battery cell.

As a result, the probability that the bus bar component is in contact with the wall of the case of the battery to charge the case may be reduced, which contributes to improving the insulation effect of the insulating member, reducing the risk of the short circuit of the battery cell, and improving the reliability of the battery.

In some embodiments, the battery cell includes a pressure relief mechanism, the connecting portion is provided with a second through hole, and the second through hole is configured to avoid the pressure relief mechanism.

The second through hole can provide an avoidance space for the actuation of the pressure relief mechanism, and when the internal pressure or temperature of the battery cell reaches a predetermined threshold, the pressure relief mechanism is easily actuated to reduce the probability of explosion and fire of the battery cell.

In some embodiments, a second blocking portion is arranged around the second through hole, and the second blocking portion protrudes from a surface of the insulating member facing the battery cell.

The second blocking portion may play a role in protecting the pressure relief mechanism in the second through hole, and can play a role in restricting the flow of the adhesive material to the pressure relief mechanism to reduce the probability that the adhesive material attached to the surface of the insulating member is in contact with the pressure relief mechanism and reduce the probability that the pressure relief mechanism is hardly actuated as it is adhered, thereby improving the reliability of the battery. At the same time, the second blocking portion can play a certain role in blocking solid particles, which can reduce the probability of damage to the pressure relief mechanism and improve the reliability of the battery.

In some embodiments, the first insulating portion is provided with a third blocking portion protruding from a surface of the first insulating portion facing the battery cell and extending along the first direction, and/or the second insulating portion is provided with a fourth blocking portion protruding from a surface of the second insulating portion facing the battery cell and extending along the second direction.

The third blocking portion and/or the fourth blocking portion may play a role in protecting the gap between adjacent battery cells and can restrict the flow of the adhesive material to the gap between the battery cells, which contributes to achieving the close arrangement of the battery cells. Thus, the influence of the adhesive material on swelling deformation of the battery cells can also be reduced, and the service life of the battery is prolonged. In addition, the third blocking portion and/or the fourth blocking portion may also play a certain role in blocking the solid particles to reduce the probability that the solid particles fall into the gap between two adjacent battery cells, so as to further reduce the probability that the solid particles damage the battery cells, so that the reliability of the battery is improved.

In some embodiments, a projection of the third blocking portion in a third direction covers a gap between the two adjacent battery cells arranged along the second direction, the third direction being perpendicular to the first direction and the second direction; and/or a projection of the fourth blocking portion in the third direction covers a gap between the two adjacent battery cells arranged along the first direction, the third direction being perpendicular to the first direction and the second direction.

The third blocking portion and/or the fourth blocking portion can restrict the flow of the adhesive material to the gap between the battery cells by covering the gap between the battery cells, which contributes to achieving the close arrangement of the battery cells. Thus, the influence of the adhesive material on swelling deformation of the battery cells can also be reduced, and the service life of the battery is prolonged. In addition, the probability that the solid particles fall into the gap between two adjacent battery cells may further be reduced, and the probability that the solid particles damage the battery cells is further reduced, thereby improving the reliability of the battery.

In some embodiments, the first insulating portion is provided with two spaced third blocking portions, projections of the two third blocking portions in the third direction are located on both sides of the gap between the two adjacent battery cells arranged along the second direction, the third direction being perpendicular to the first direction and the second direction; and/or the second insulating portion is provided with two spaced fourth blocking portions, and projections of the two fourth blocking portions in the third direction are located on both sides of the gap between the two adjacent two battery cells arranged along the first direction, the third direction being perpendicular to the first direction and the second direction.

The third blocking portion and/or the fourth blocking portion can restrict the adhesive material or the solid particles from entering into the gap at both sides of the gap of the battery cell, which contributes to reducing the probability that the adhesive material or the solid particles enter into the gap, so as to achieve the close arrangement between the battery cells. Thus, the influence of the adhesive material or the solid particles on the swelling deformation of the battery cell can also be reduced, and the service life of the battery is prolonged. At the same time, the arrangement of the blocking portions on both sides of the gap between the battery cells can also reduce a material required for the blocking portions, reduce the production cost, and reduce the weight of the battery.

In some embodiments, the insulating member includes a sampling assembly, and the sampling assembly is arranged on the first insulating portion and/or the second insulating portion.

In a case where there are more battery cells, the arrangement of the sampling assembly on the insulating member may increase the degree of integration of the sampling assembly and the insulating member, which can improve the production efficiency and reduce the production cost of the sampling assembly.

In some embodiments, light transmittance of the first insulating portion and/or the second insulating portion is 20% to 100%.

In an assembly process, the first insulating portion and/or the second insulating portion are made of a material having light transmittance of 20% to 100% to facilitate observation and control of the assembly process, so that adjustments can be made in time to improve the percent of pass in the battery production process.

In some embodiments, the battery further includes an adhesive layer, configured to adhere the insulating member and the battery cell.

The adhesive layer can enable a fixed connection of the insulating member to the battery cell, so that an insulating failure due to separation of the battery cell from the insulating member is avoided. At the same time, the adhesive layer can fix the relative positions among the plurality of battery cells through the insulating member, so that a danger due to mutual collision of the battery cells in the battery is avoided.

In some embodiments, a material of the adhesive layer is a photosensitive adhesive.

The photosensitive adhesive can accelerate a solidification process by illumination, reduce the manufacturing time of the battery, and improve the manufacturing efficiency.

In some embodiments, the battery includes a first case portion, where the first case portion is of a hollow structure having an opening, and a plurality of the battery cells are accommodated in the hollow structure; and a second case portion, where the second case portion and the first case portion cover each other, and the second case portion is fixedly connected to the insulating member.

The second case portion can further fix the position of the battery cell in the battery by being fixedly connected to the insulating member, so that the sway of the battery cell in the first case portion is reduced, and the probability that the battery cell is damaged due to the collision in the battery is reduced, thereby improving the reliability of the battery.

In some embodiments, the second case portion is adhesively fixed to the insulating member.

When the adhesive is coated on the surface, the adhesive may have a certain thickness, so as to fill the gap between the second case portion and the insulating member, thereby improving the adhesive strength between the second case portion and the insulating member. The use of the adhesive to connect the second case portion and the insulating member may further improve the shock resistance of the battery.

In a second aspect, provided is an electric device, including the battery according to any one of the embodiments in the first aspect, where the battery is configured to provide electric energy to the electric device.

### DESCRIPTION OF DRAWINGS

In order to more clearly illustrate the technical solutions of the embodiments of the present application, the drawings required to be used in the embodiments of the present application will be briefly introduced below. Apparently, the drawings described below are only some embodiments of the present application. For persons of ordinary skill in the art, other drawings can also be obtained from the drawings without creative work.
FIG. 1 is a schematic structural diagram of a vehicle according to embodiments of the present application.
FIG. 2 is an exploded schematic structural diagram of a battery according to embodiments of the present application.
FIG. 3 is an exploded schematic structural diagram of another battery according to embodiments of the present application.
FIG. 4 is an exploded schematic structural diagram of an insulating member according to embodiments of the present application.
FIG. 5 is an exploded schematic structural diagram of another insulating member according to embodiments of the present application.
FIG. 6 is an exploded schematic structural diagram of another insulating member according to embodiments of the present application.
FIG. 7 is an enlarged schematic structural diagram of a portion A in FIG. 6.
FIG. 8 is an exploded schematic structural diagram of another battery according to embodiments of the present application.
FIG. 9 is a schematic structural diagram of another battery according to embodiments of the present application.
FIG. 10 is an enlarged schematic structural diagram of a portion B in FIG. 9.
FIG. 11 is a schematic structural diagram of another battery according to embodiments of the present application.
FIG. 12 is a schematic structural diagram of another battery according to embodiments of the present application.
FIG. 13 is an enlarged schematic diagram of a portion C in FIG. 11.
FIG. 14 is an exploded schematic structural diagram of another insulating member according to embodiments of the present application.
FIG. 15 is an enlarged schematic structural diagram of a portion D in FIG. 12.

In the drawings, the figures are not drawn to actual scale.

### DESCRIPTION OF EMBODIMENTS

The following further describes implementations of the present application in detail with reference to the accompanying drawings and embodiments. The following detailed description of the embodiments and the accompanying drawings are used to describe the principles of the present application by way of example, but are not intended to limit the scope of the present application, that is, the present application is not limited to the described embodiments.

In the descriptions of the present application, it should be noted that, unless otherwise noted, "a plurality of "means two or more; and an orientation relationship or a position relationship indicated by terms "upper", "lower", "left", "right", "inside", and "outside" is merely for ease of describing present application and simplifying the description, rather than indicating or implying that a specified apparatus or element necessarily has a specific orientation or is constructed and operated in a specific orientation. Therefore, the terms should not be construed as a limitation on this application. In addition, the terms "first", "second", "third", and the like are used merely for description purposes, and should not be understood as an indication or implication of relative importance. "Perpendicular" is not perpendicular in the strict sense, but is within an allowable range of error. "Parallel" is not parallel in the strict sense, but is within an allowable range of error. Unless otherwise defined, all technical and scientific terms used in the present application have the same meaning as commonly understood by a person skilled in the art of the present application. In the present application, the terms used in the specification of the present application are used only for the purpose of describing specific embodiments and are not intended to limit the present application, and the terms "comprise", "have", and any variations thereof in the specification and claims of the present application and the foregoing description of the drawings are intended to cover a non-exclusive inclusion.

The orientation words appearing in the following description are all directions shown in the drawings, and do not limit the specific structure in the present application. **In** the description of the present application, it should be further noted that, unless explicitly specified and defined otherwise, the terms "mounted", "connected", and "connect" are to be understood in a broad sense, for example, may be fixedly connected, detachably connected, or integrally connected, may be directly connected, or may be indirectly connected through an intermediate medium. Those of ordinary skill in the art may understand specific meanings of these terms in the present application according to specific situations.

An "embodiment" in the present application means that a specific feature, structure, or characteristic described with reference to the embodiment may be included in at least one embodiment of the present application. The phrase in various places in the description does not necessarily all refer to the same embodiment, or a separate or alternative embodiment mutually exclusive of other embodiments. A person skilled in the art explicitly and implicitly understands that the described embodiments in the present application may be combined with another embodiment.

In the present application, the term "and/or" only describes an association relationship between associated objects, and indicates that three relationships may exist. For example, A and/or B may indicate the following three cases: A exists, both A and B exist, and B exists. **In** addition, the symbol "/" in the present application generally represents an "or" relationship between associated objects.

In the present application, "plurality" means two or more than two (including two). Similarly, "a plurality of groups" means two or more than two groups, and "a plurality of pieces" means two or more than two pieces.

In the embodiments of the present application, the same reference numerals denote the same component, and a detailed description of the same component is omitted in different embodiments for the sake of brevity. It should be understood that sizes of various components, such as thickness, length, and width, in the embodiments of the present application shown in the drawings are merely illustrative and should not be construed as limiting the present application.

In the present application, the battery cell may include a lithium-ion battery, a lithium-ion primary battery, a lithium-sulfur battery, a sodium lithium-ion battery, a sodium ion battery, a lithium metal battery or a magnesium ion battery, or the like, which is not limited in the embodiments of the present application. The battery cell may be in a shape of a cylinder, a flat body, a cuboid, or the like, which is not limited in the embodiments of the present application. The battery cell is generally classified into three types according to a packaging manner: a cylindrical battery cell, a square battery cell, and a pouch battery cell, which is not limited in the embodiments of the present application.

A battery mentioned in the embodiments of the present application refers to a single physical module including one or a plurality of battery cells to provide a higher voltage and capacity. For example, the battery mentioned in the present application may include a battery module or a battery pack, or the like. The battery generally includes a case for encapsulating one or more battery cells. The case may reduce liquid or other foreign matters from affecting the charge or discharge of the battery cell.

The battery cell includes an electrode assembly and an electrolyte solution. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active substance layer. The positive electrode active substance layer is coated on a surface of the positive electrode current collector. The positive electrode current collector not coated with the positive electrode active substance layer protrudes from the positive electrode current collector coated with the positive electrode active substance layer, and the positive electrode current collector not coated with the positive electrode active substance layer is a positive electrode lug. A lithium-ion battery is used as an example, for which, the positive electrode current collector may be made of aluminum, and the positive electrode active substance may be lithium cobalt oxide, lithium iron phosphate, ternary lithium, lithium manganate oxide, or the like. The negative electrode plate includes a negative electrode current collector and a negative electrode active substance layer. The negative electrode active substance layer is coated on a surface of the negative electrode current collector. The negative electrode current collector not coated with the negative electrode active substance layer protrudes from the negative electrode current collector coated with the negative electrode active substance layer, and the negative electrode current collector not coated with the negative electrode active substance layer is a negative electrode lug. The negative electrode current collector may be made of copper, and a negative electrode active substance may be carbon, silicon, a lithium metal or a lithium alloy, or the like. To ensure that a large current passes through without any fusing, a plurality of positive electrode lugs are arranged and stacked together, and a plurality of negative electrode lugs are arranged and stacked together. The separator may be made of polypropylene (PP), polyethylene (PE), or the like. In addition, the electrode assembly in the embodiments of the present application includes, but is not limited to, a winding type structure or a stacking type structure.

With the development of the battery technology, more and more battery cells are accommodated in a battery, it is increasingly difficult to fix the plurality of battery cells and insulate the battery cells, and the mechanical strength of a battery module formed by the plurality of battery cells is low, so that the battery has a problem of insufficient reliability during use.

In view of this, an embodiment of the present application provides a battery, where a battery cell is insulated from another portion of the battery through an insulating member. The insulating member includes a first insulating portion and a second insulating portion extending along a first direction to connect a plurality of battery cells arranged along the first direction and the plurality of battery cells arranged along the second direction, respectively, and the first insulating portion and the second insulating portion may not only provide insulation for each of the battery cells, but also improve the overall rigidity of the battery module formed by the plurality of battery cells to improve the mechanical strength and reliability of the battery, which contributes to prolonging the service life of the battery.

The technical solutions described in the embodiments of the present application are all applicable to various electrical devices using batteries. The electric device may be a vehicle, a mobile phone, a portable device, a notebook computer, a ship, a spacecraft, an electric toy, an electric tool, and the like. The vehicle may be a fuel vehicle, a gas vehicle, or a new energy vehicle which may be a pure electric vehicle, a hybrid vehicle, a range-extended electric vehicle, or the like; the spacecraft includes an airplane, a rocket, a space plane, a spaceship, or the like; the electric toy includes a stationary or mobile electric toy, such as a game machine, an electric car toy, an electric ship toy, an electric airplane toy, or the like; and the electric tool includes a metal cutting electric tool, a grinding electric tool, an assembly electric tool, and an electric tool for railways, such as, an electric drill, an electric sander, an electric wrench, an electric screwdriver, an electric hammer, an impact drill, a concrete vibrator, an electric planer, or the like. In the embodiments of the present application, the above described electric device is not particularly limited.

To facilitate description, in the following embodiments, as an example for description, an electric device is a vehicle.

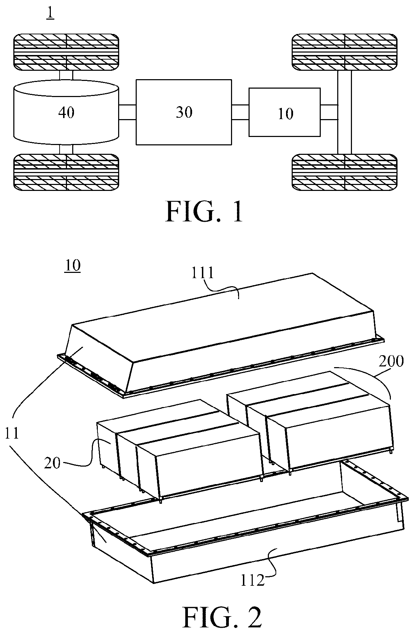

For example, as shown in FIG. 1, FIG. 1 is a schematic structural diagram of a vehicle 1 according to an embodiment of the present application. The vehicle 1 may be a fuel vehicle, a gas vehicle, or a new energy vehicle, and the new energy vehicle may be a battery electric vehicle, a hybrid vehicle, or a range-extended electric vehicle, or the like. A motor 40, a controller 30, and a battery 10 may be arranged inside the vehicle 1. The controller 30 is configured to control the battery 10 to supply power to the motor 40. For example, the battery 10 may be arranged at the bottom or at the head or at the tail of the vehicle 1. The battery 10 may be configured to supply power to the vehicle 1, for example, the battery 10 may be used as an operating power source for the vehicle 1, used for a circuit system of the vehicle 1, for example, used for operating power requirements for starting, navigation, and running of the vehicle 1. In another embodiment of the present application, the battery 10 may be used not only as the operating power source of the vehicle 1, but also as a driving power source of the vehicle 1, instead of or partially instead of fuel or natural gas to provide driving power to the vehicle 1.

To meet different power requirements, the battery may include a plurality of cells, where the plurality of cells may be connected through series connection, parallel connection or parallel-series connection, and the parallel-series connection refers to a mixture of series connection and parallel connection. The battery may also be referred to as a battery pack. Optionally, the plurality of battery cells may first form a battery module through series connection, parallel connection, or parallel-series connection, and then a plurality of battery modules form the battery through series connection, parallel connection, or parallel-series connection. That is, the plurality of battery cells may directly constitute the battery, or may constitute the battery module first, and the battery module constitutes the battery.

For example, FIG. 2 shows a schematic structural diagram of a battery 10 according to an embodiment of the present application, and the battery 10 may include at least one battery module 200. The battery module 200 includes a plurality of battery cells 20. The battery 10 may further include a case 11, an interior of the case 11 is of a hollow structure, and the plurality of battery cells 20 are accommodated in the case 11. FIG. 2 shows a possible implementation of the case 11 according to an embodiment of the present application. As shown in FIG. 2, the case 11 may include two portions, which are referred to as a first case portion 111 and a second case portion 112, respectively, and the first case portion 111 and the second case portion 112 are buckled together. The shapes of the first case body 111 and the second case body 112 may be determined according to the combined shape of the battery modules 200, and at least one of the first case body 111 and the second case body 112 has an opening. For example, as shown in FIG. 2, the first case portion 111 and the second case portion 112 each may be a hollow cuboid with only one surface being an opening surface, an opening of the first case portion 111 and an opening of the second case portion 112 are formed to face each other, and the first case portion 111 and the second case portion 112 are buckled with each other to form the case 11 having a closed chamber.

For another example, different from FIG. 2, only one of the first case portion 111 and the second case portion 112 may be a hollow cuboid having an opening, and the other may be a plate to cover the opening. For example, here, taking an example in which the second case portion 112 is a hollow cuboid with only one surface being an opening surface and the first case portion 111 is a plate as an example, the first case portion 111 covers the opening of the second case portion 112 to form a case 11 having a closed chamber which may be configured to accommodate a plurality of battery cells 20. The plurality of battery cells 20 combined through series connection, parallel connection or parallel-series connection with each other are arranged in the case 11 formed by buckling the first case portion 111 and the second case portion 112.

Optionally, the battery 10 may further include other structures, which are not described in detail herein. For example, the battery 10 may further include a bus bar component for implementing an electrical connection between the plurality of battery cells 20, such as parallel connection, series connection, or parallel-series connection. Specifically, the bus bar component may implement an electrical connection between the battery cells 20 by connecting the electrode terminals of the battery cells 20. Further, the bus bar component may be fixed to the electrode terminal of the battery cell 20 by welding. The electrical energy of the plurality of battery cells 20 may be further led out through the case 11 by a conductive mechanism.

The number of the battery cells 20 in the battery module 200 may be set to any number according to different power requirements. The plurality of battery cells 20 may be connected through series connection, parallel connection or parallel-series connection to achieve larger capacity or power. Since the number of the battery cells 20 included in each battery 10 may be great, the battery cells 20 are arranged in groups for easy installation, and each group of the battery cells 20 constitutes the battery module 200. The number of the battery cells 20 included in the battery module 200 is not limited and may be set according to requirements.

The battery 10 may include a plurality of battery modules 200, and the battery modules 200 may be connected through series connection, parallel connection or series-parallel connection.

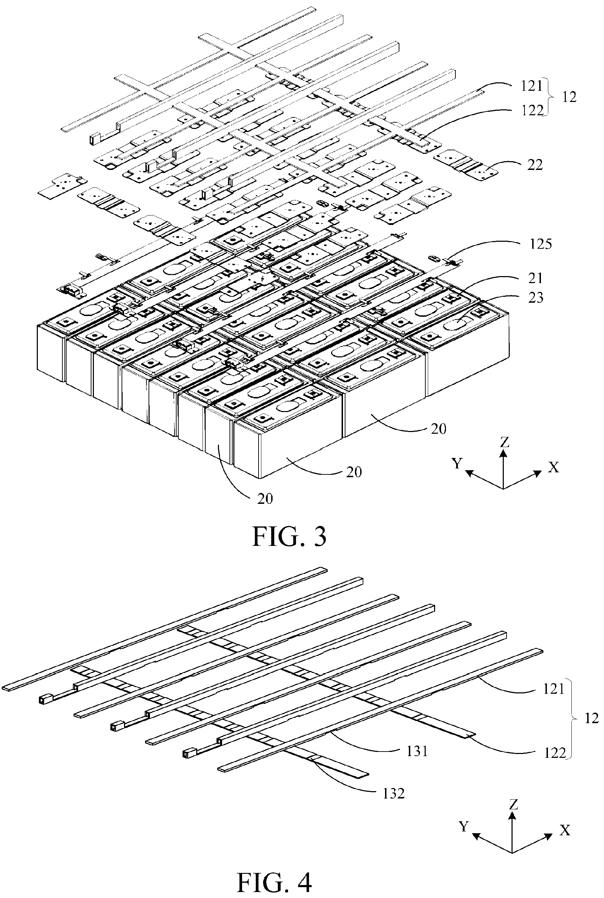

FIG. 3 is an exploded schematic structural diagram of a battery 10 according to an embodiment of the present application, and the battery 10 shown in FIG. 3 may include a plurality of battery cells 20 and an insulating member 12.

The plurality of battery cells 20 are arranged in a matrix along a first direction X and a second direction Y, the first direction X being perpendicular to the second direction Y. The insulating member 12 includes a first insulating portion 121 extending along the first direction X and a second insulating portion 122 extending along the second direction Y, the first insulating portion 121 being fixedly connected to the plurality of battery cells 20 arranged along the first direction X, and the second insulating portion 122 being fixedly connected to the plurality of battery cells 20 arranged along the second direction Y.

To facilitate understanding and description, the embodiment provided in the present application is described only with the battery cell 20 having a cuboid shape. It should be understood that the embodiment provided in the present application is also applicable to the battery cell 20 having a cylindrical shape or the pouch battery cell 20, which is not limited in the embodiment of the present application.

As can be seen from FIG. 3, the matrix arrangement means that the plurality of battery cells 20 are arranged along the first direction X and the second direction Y. The first direction X may be a direction extending along one side of the battery cell 20, for example, a longitudinal direction of the battery cell 20, and the second direction Y may be a direction perpendicular to the first direction X, for example, a thickness direction of the battery cell 20. In some embodiments, the electrode terminals 21 of the plurality of battery cells 20 may be located in a plane formed by the first direction X and the second direction Y.

The plurality of battery cells 20 are arranged in a matrix along the first direction X and the second direction Y, which means that the plurality of battery cells 20 are arranged in a rectangular shape in the plane formed by the first direction X and the second direction Y. Specifically, the plurality of battery cells 20 may be arranged in a plurality of rows with the same number of battery cells 20 in each row, or may be arranged in a plurality of columns with the same number of battery cells 20 in each column.

The insulating member 12 refers to a structure for insulating the battery cell 20 from other portions of the battery cell 10 in the battery 10, and specifically, the insulating member 12 may occupy a certain space on the surface of the battery cell 20 to enable the battery cell 20 unlikely to be in contact with the other portions of the battery 10, so as to insulate the battery cell 20. In some embodiments, the insulating member 12 may be arranged between the battery cell 20 and the case 11 so as to insulate the battery cell 20 from the case 11 of the battery 10, and specifically, the insulating member may be arranged between a plane on which the electrode terminal 21 of the battery cell 20 is located and a first wall, and the first wall may be a wall of the case 11 arranged opposite to the plane on which the electrode terminal 21 is located. The insulating member 12 may be made of an insulating material to occupy a certain space between the battery cell 20 and the case 11, so that the battery cell 20 is unlikely to be in contact with the wall of the case 11, thereby achieving insulation of the electrode terminal 21 from the case 11 of the battery 10.

The first insulating portion 121 is a portion of the insulating material 12 extending along the first direction X, and the second insulating portion 122 is a portion of the insulating material 12 extending along the second direction Y. The first insulating portion 121 and the second insulating portion 122 may be arranged on the same plane. In some embodiments, the first insulating portion 121 and the second insulating portion 122 may be a whole, that is, an integrally molded structure; optionally, the first insulating portion 121 and the second insulating portion 122 may be two separate portions are connected to each other by a connecting structure. In some embodiments, the insulating member 12 may include at least one first insulating portion 121 and at least one second insulating portion 122, the at least one first insulating portion 121 may respectively correspond to a group of the battery cells 20 arranged along the first direction X, and the at least one second insulating portion 122 may respectively correspond to a group of the battery cells 20 arranged along the second direction Y. The insulating member 12 shown in FIG. 3 includes a plurality of first insulating portions 121 and a plurality of second insulating portions 122, and as shown in FIG. 3, the plurality of first insulating portions 121 and the plurality of second insulating portions 122 may form a mesh-like insulating member 12.

The first insulating portion 121 may be fixedly connected to the plurality of battery cells 20 arranged along the first direction X to integrally connect the plurality of battery cells 20 arranged along the first direction X, thereby reducing sway of the battery cells 20 and collision between adjacent battery cells 20. Similarly, the second insulating portion 122 is fixedly connected to the plurality of battery cells 20 arranged along the second direction Y to integrally connect the plurality of battery cells 20 arranged along the second direction Y. In some embodiments, the first insulating portion 121 and the second insulating portion 122 form the mesh-like insulating member 12, and the plurality of battery cells 20 may be fixed in the first direction X and the second direction Y, which may further improve the stability among the plurality of battery cells 20.

**In** some embodiments, the first insulating portion 121 may be fixedly connected to a group of battery cells 20 arranged along the first direction X, and each group of battery cells 20 may correspond to one first insulating portion 121. Optionally, the first insulating portion 121 may be fixedly connected to two adjacent groups of the battery cells 20 arranged along the first direction X at the same time, and every two adjacent groups of the battery cells 20 arranged along the first direction X correspond to one first insulating portion 121. Similarly, the second insulating portion 122 may be fixedly connected to one group of the battery cells 20 arranged along the second direction Y, or may be fixedly connected to two adjacent groups of the battery cells 20 arranged along the second direction Y at the same time.

The insulating member 12 may occupy a certain space on the surface of the battery cell 20 to separate the battery cell 20 from other portions of the battery 10, so that the battery cell 20 is unlikely to be in contact with other portions of the battery 10, thereby reducing the risk of a short circuit of the battery cell 20, and improving the reliability of the battery 10. The first insulating portion 121 and the second insulating portion 122 arranged in a cross manner along the first direction X and the second direction Y also can play a good supporting role, so that the battery 10 is unlikely to be damaged by an external force. Meanwhile, the first insulating portion 121 and the second insulating portion 122 in the insulating member 12 can fix the plurality of battery cells 20 in the first direction X and the second direction Y, respectively, so that the plurality of battery cells 20 form a whole, and the overall rigidity and mechanical strength of the battery 10 can be improved, thereby improving the reliability of the battery 10 and prolonging the service life thereof.

According to some embodiments of the present application, optionally, the first insulating portion 121 is fixedly connected to two adjacent battery cells 20 arranged along the second direction Y, and/or the second insulating portion 122 is fixedly connected to two adjacent battery cells 20 arranged along the first direction X.

The first insulating portion 121 may also be fixedly connected to at least two adjacent battery cells 20 arranged along the second direction Y while being fixedly connected to the plurality of battery cells 20 arranged along the first direction X. In this case, the first insulating portion 121 may cover at least a part of the gap between the two adjacent battery cells 20 arranged along the second direction Y. In some embodiments, the first insulating portion 121 may fixedly connect two adjacent groups of the plurality of battery cells 20 arranged along the first direction X.

Similar to the first insulating portion 121, the second insulating portion 122 may also be connected to at least two adjacent battery cells 20 arranged along the first direction X at the same time, and the second insulating portion 122 may cover at least a part of the gap between the two adjacent battery cells 20 arranged along the first direction X.

In a possible implementation, the first insulating portion 121 is fixedly connected to the two adjacent battery cells 20 arranged along the second direction Y, and the second insulating portion 122 is not fixedly connected to the two adjacent battery cells 20 arranged along the first direction X; in another possible implementation, the second insulating portion 122 is fixedly connected to the two adjacent battery cells 20 arranged along the first direction X, and the first insulating portion 121 is not fixedly connected to the two adjacent battery cells 20 arranged along the second direction Y; and in another possible implementation, the second insulating portion 122 is also fixedly connected to the two adjacent battery cells 20 arranged along the first direction X while the first insulating portion 121 is fixedly connected to the two adjacent battery cells 20 arranged along the second direction Y.

The first insulating portion 121 and/or the second insulating portion 122 can be fixedly connected to more battery cells 20 at the same time, so that a connection among the plurality of battery cells 20 can be more stable, so that the overall rigidity of the battery 10 can be further improved. This may also reduce the number of the first insulating portion 121 and the second insulating portion 122, which contributes to saving the manufacturing cost of the insulating member 12.

According to some embodiments of the present application, optionally, the first insulating portion 121 and the second insulating portion 122 are fixedly connected.

The fixed connection between the first insulating portion 121 and the second insulating portion 122 means that the relative positions of the first insulating portion 121 and the second insulating portion 122 are fixed. In a possible implementation, the first insulating portion 121 and the second insulating portion 122 may be fixedly connected by a clamping connection, for example, a buckling connection, a shaft hole clamping connection, a groove clamping connection, or the like; in another possible implementation, the first insulating portion 121 and the second insulating portion 122 may be fixedly connected by a fastener, for example, a bolt, a screw, or the like; and in another possible implementation, the first insulating portion 121 and the second insulating portion 122 may be fixedly connected by adhesion.

The fixed connection between the first insulating portion 121 and the second insulating portion 122 may make the structure of the insulating member 12 more stable and unlikely to generate a relative movement, which contributes to providing good insulating performance for the battery 10. At the same time, the first insulating portion 121 and the second insulating portion 122 are fixedly connected as a whole, which contributes to simplifying the assembly process and improving the production efficiency.

According to some embodiments of the present application, optionally, the first insulating portion 121 is provided with a first groove 131, and the first groove 131 is clamped with the second insulating portion 122; and/or,
the second insulating portion 122 is provided with a second groove 132, and the second groove 132 is clamped with the first insulating portion 121.

The first insulating portion 121 and/or the second insulating portion 122 may be clamped with each other by forming a groove. As shown in FIG. 4, FIG. 4 shows an exploded schematic structural diagram of the insulating member 12.

In a possible implementation, the first insulating portion 121 may be provided with a first groove 131, and optionally, the first groove 131 may be formed in a surface of the first insulating portion 121 facing the second insulating portion 122. In some embodiments, a size of the first groove 131 in the first direction X is substantially equal to a size of the second insulating portion 122 in the first direction X, and the first groove 131 is clamped with the second insulating portion 122 to restrict the position of the second insulating portion 122 in the first direction X.

In a possible implementation, the second insulating portion 122 may be provided with a second groove 132, and optionally, the second groove 132 may be formed in a surface of the second insulating portion 122 facing the first insulating portion 121. In some embodiments, a size of the second groove 132 in the second direction Y is substantially equal to a size of the first insulating portion 121 in the second direction Y, and the second groove 132 is clamped with the first insulating portion 121 to restrict the position of the first insulating portion 121 in the second direction Y.

In a possible implementation, the first insulating portion 121 is provided with a first groove 131 and the second insulating portion 122 is provided with a second groove 132, and the first groove 131 and the second groove 132 are arranged opposite to each other. The size of the first groove 131 in the first direction X is substantially equal to the size of the second insulating portion 122 in the first direction X, the size of the second groove 132 in the second direction Y is substantially equal to the size of the first insulating portion 121 in the second direction Y, and the first groove 131 and the second groove 132 are clamped with each other to restrict the positions of the first insulating portion 121 and the second insulating portion 122 in the first direction X and the second direction Y at the same time.

By connecting the first insulating portion 121 and the second insulating portion 122 in a clamping manner, the assembly of the two may be more flexible, the positions of the first insulating portion 121 and the second insulating portion 122 can be adjusted according to the actual situation, and in the case of damage to the first insulating portion 121 or the second insulating portion 122, only the damaged insulating portion can be replaced without replacing the entire insulating member 12, so that the loss in the production process may be reduced.

According to some embodiments of the present application, optionally, the insulating member 12 is of an integrally molded structure.

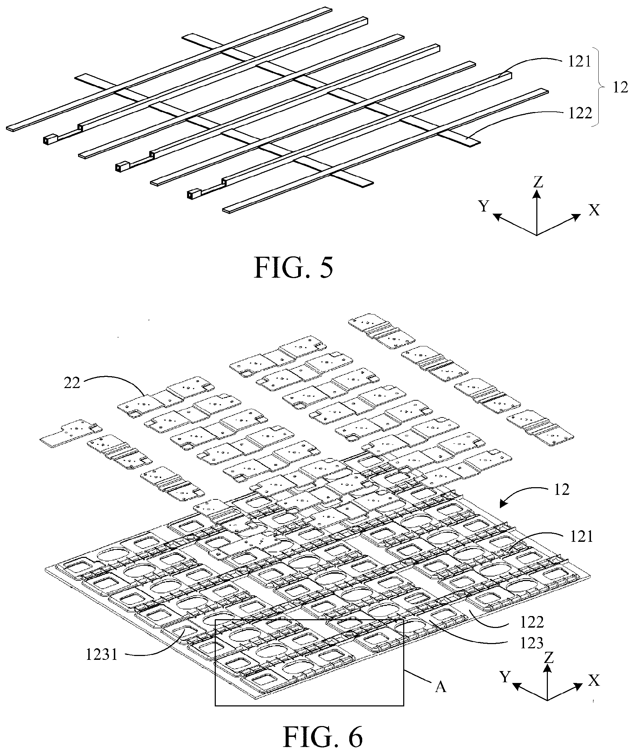

As shown in FIG. 5, FIG. 5 shows a case where the insulating member 12 is of an integrally molded structure. For example, the first insulating portion 121 and the second insulating portion 122 may be integrally molded by using a mold, and the first insulating portion 121 and the second insulating portion 122 are fixedly connected.

As a result, the connection strength between the first insulating portion 121 and the second insulating portion 122 can be increased, so that the first insulating portion 121 and the second insulating portion 122 are unlikely to be separated from each other, the connection strength between the first insulating portion 121 and the second insulating portion 122 and the battery cell 20 can be increased, and the overall rigidity of the battery 10 can be increased.

According to some embodiments of the present application, optionally, the insulating member 12 includes a connecting portion 123, and the connecting portion 123 is configured to connect the first insulating portion 121 and the second insulating portion 122 on a plane formed by the first direction X and the second direction Y.

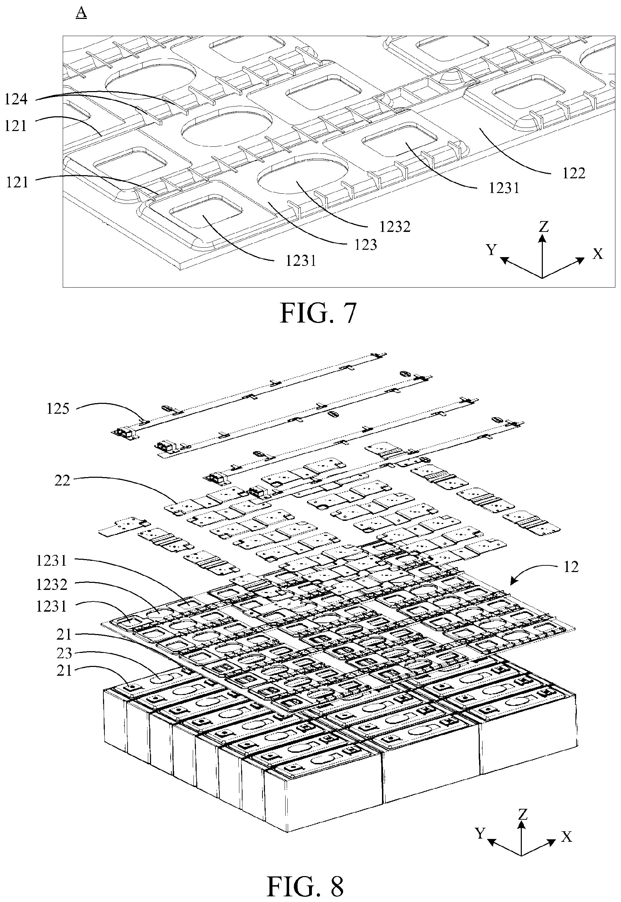

FIG. 6 and FIG. 7 show a structure of an insulating member 12 according to an embodiment of the present application, where FIG. 7 is an enlarged schematic structural diagram of a portion A in FIG. 6. In FIG. 6 and FIG. 7, the first insulating portion 121 extends along the first direction X, the second insulating portion 122 extends along the second direction Y, the first insulating portion 121 and the second insulating portion 122 are connected to each other to form a mesh-like structure, and a structure for filling at least a partial region of the mesh in the mesh-like structure is a connecting portion 123. Specifically, at least one of both ends of the connecting portion 123 along the first direction X is connected to the second insulating portion 122, and at least one of both ends of the connecting portion 123 along the second direction Y is connected to the first insulating portion 121. In some embodiments, the connecting portion 123 may also be made of an insulating material. In some embodiments, the first insulating portion 121, the second insulating portion 122, and the connecting portion 123 are of an integrally molded structure.

In some embodiments, reinforcing structures 124 may be arranged between adjacent connecting portions 123. As shown in FIG. 7, the reinforcing structure 124 may be arranged between two adjacent connecting portions 123 in the second direction Y, a plurality of reinforcing structures 124 may be spaced apart from each other along the first direction X, or optionally, the reinforcing structures 124 may be connected to the first insulating portion 121 and the connecting portions 123 on both sides of the first insulating portion 121 at the same time. In some embodiments, the reinforcing structures 124 may also be arranged at edges of the insulator 12 to increase the strength of the edges of the insulating member 12. In some embodiments, the reinforcing structure 124 may include a reinforcing rib. In some embodiments, the first insulating portion 121, the second insulating portion 122, the connecting portion 123, and the reinforcing structure 124 are of an integrally molded structure.

The connecting portion 123 may improve the strength and stability of the insulating member 12, increase the cover area of the insulating member 12 on the battery cell 20, and achieve insulation in a wider range, so that the insulation effect of the insulating member 12 is further improved.

According to some embodiments of the present application, optionally, the battery cell 20 includes an electrode terminal 21, the connecting portion 123 is provided with a first through hole 1231, and the first through hole 1231 is configured to avoid the electrode terminal 21.

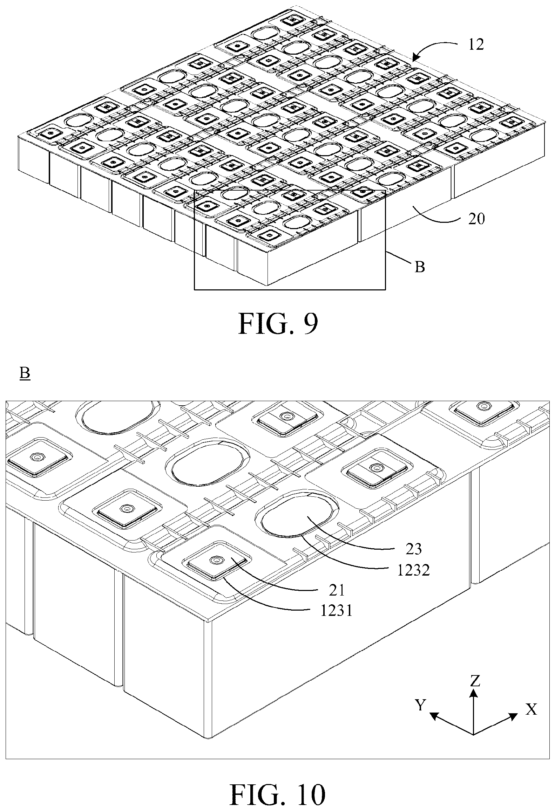

FIG. 8 is an exploded schematic structural diagram of a battery 10 according to an embodiment of the present application, FIG. 9 is an assembled schematic structural diagram of an insulating member 12 and a battery cell 20, and FIG. 10 is an enlarged schematic structural diagram of a portion B in FIG. 9. As shown in FIGS. 6 to 10, the first through hole 1231 may be formed in the connecting portion 123 so as to penetrate the connecting portion 123 in the third direction Z. The third direction Z is perpendicular to a plane formed by the first direction X and the second direction Y, and may refer to a thickness direction of the insulating member 12.

The first through hole 1231 is formed corresponding to the electrode terminal 21, and optionally, each first through hole 1231 in the insulating member 12 may correspond to one electrode terminal 21. The first through hole 1231 can avoid the electrode terminal 21, so that the electrode terminal 21 and the insulating member 12 do not interfere with each other. As shown in FIS. 9 and FIG. 10, at least a part of the electrode terminal 21 is accommodated in the first through hole 1231, and the position where the electrode terminal 21 is located is not covered by the insulating member 12, and the electrode terminal 21 can be connected to the bus bar component 22 to achieve an electrical connection among different battery cells 20.

The first through hole 1231 can reduce interference between the electrode terminal 21 and the insulating member 12, so that the electrode terminal 21 can be connected to the bus bar component 22 to achieve an electrical connection among different battery cells 20. At the same time, the mutual fit between the first through hole 1231 and the electrode terminal 21 can also play a role in positioning the insulating member 12 in the battery 10, which contributes to improving the accuracy of the mounting position of the insulating member 12.

According to some embodiments of the present application, optionally, the battery cell 20 includes a pressure relief mechanism 23, the connecting portion 123 is provided with a second through hole 1232, and the second through hole 1232 is configured to avoid the pressure relief mechanism 23.

The pressure relief mechanism 23 refers to an element or component that is actuated when the internal pressure or temperature of the battery cell 20 reaches a predetermined threshold value to relieve the internal pressure. Here, "actuation" means that the pressure release mechanism 23 generates an action, so that the internal pressure and temperature of the battery cell 20 are released. The action produced by the pressure relief mechanism 23 may include, but is not limited to, rupturing, tearing or melting, and the like of at least a part of the pressure relief mechanism 23. After the pressure relief mechanism 23 is activated, high-temperature and high-pressure substances inside the battery cell 20 are discharged as an emission from the pressure relief mechanism 23. The predetermined threshold may be adjusted according to different design requirements. The predetermined threshold may depend on the material of one or more of a positive electrode plate, a negative electrode plate, an electrolyte solution, and a separator in the battery cell 20. The pressure relief mechanism 23 may use elements or components that are sensitive to, for example, pressure or temperature, i.e., when the internal pressure or temperature of the battery cell 20 reaches the predetermined threshold, the pressure relief mechanism 23 is actuated to form a channel through which the internal pressure may be relieved. The emission from the battery cell 20 includes, but is not limited to, an electrolyte solution, dissolved or disintegrated positive and negative electrode plates, fragments of the separator, high temperature and high pressure gases generated by reactions, flames, and the like.

The pressure relief mechanism 23 on the battery cell 20 has a significant effect on the reliability of the battery 10. For example, when a short circuit, overcharge, or the like occurs in the battery cell 20, thermal runaway may occur in the battery cell 20, so that the pressure or the temperature may rapidly increase. In this case, the internal pressure and temperature may be released to the outside by actuating the pressure release mechanism 23 to reduce the probability of explosion and fire of the battery cell 20.

As shown in FIGS. 6 to 10, the second through hole 1232 may be formed in the connecting portion 123 so as to penetrate the connecting portion 123 in the third direction Z. The second through holes 1232 may be formed corresponding to the pressure relief mechanism 23, and optionally, each second through hole 1232 in the insulating member 12 may correspond to one pressure relief mechanism 23. The second through hole 1232 avoids the pressure relief mechanism 23, which means that the second through hole 1232 may reserve a certain space for the actuation of the pressure relief mechanism 23, so that the pressure relief mechanism 23 can use the space to release the internal pressure and temperature. As shown in FIG. 9 and FIG. 10, in some embodiments, the accommodating space formed by the second through hole 1232 may provide space for actuation of the pressure relief mechanism 23. Optionally, at least a part of the pressure relief mechanism 23 may also be accommodated in the second through hole 1232.

The second through hole 1232 can provide an avoidance space for the actuation of the pressure relief mechanism 23, and when the internal pressure or temperature of the battery cell 20 reaches the predetermined threshold, the pressure relief mechanism 23 is easily actuated to reduce the probability of explosion and fire of the battery cell 20.

According to some embodiments of the present application, optionally, the insulating member 12 includes a bus bar component 22, the bus bar component 22 corresponds to two adjacent first through holes 1231, and the two adjacent first through holes 1231 respectively correspond to the electrode terminals 21 of different battery cells 20.

The bus bar component 22 may be configured to realize an electrical connection among the plurality of battery cells 20, for example, parallel connection, series connection or series-parallel connection. Specifically, the bus bar component 22 may achieve an electrical connection between the battery cells 20 by connecting the electrode terminals 21 of the battery cells 20. Further, the bus bar component 22 may be fixed to the electrode terminal 21 of the battery cell 20 by welding, and the electrical energy of the plurality of battery cells 20 may be further led out through the case 11 by a conductive mechanism.

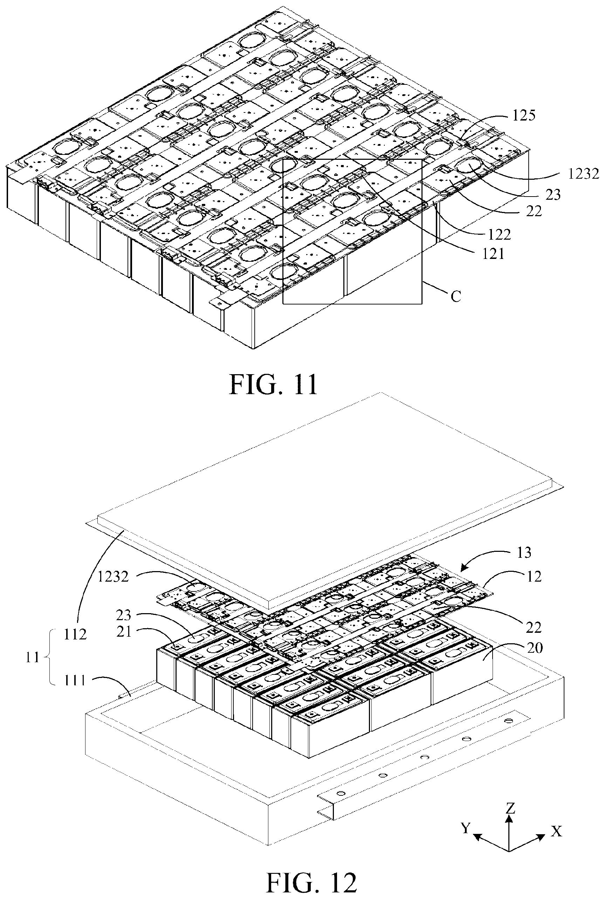

FIG. 11 is an assembled schematic structural diagram of the insulating member 12, the battery cells 20, and the bus bar component 22. As shown in FIG. 8 to FIG. 11, the bus bar component 22 is configured to be connected the electrode terminals 21 of the two adjacent battery cells 20, and the electrode terminals 21 correspond to the first through holes 1231, and the bus bar component 22 needs to correspond to the two adjacent first through holes 1231, where the two adjacent first through holes 1231 respectively correspond to the electrode terminals 21 of different battery cells 20, so that the bus bar component 22 can realize series connection or parallel connection of the two adjacent battery cells 20 in case of the insulating member 12 arranged on the surface of the battery cell 20. In the embodiment of the present application, the first through hole 1231 provides a space for connection of the bus bar component 22 and the electrode terminal 21, and the bus bar component 22 may cover the first through hole 1231 to be connected to the electrode terminal 21.

In a possible implementation, the insulating member 12 and the bus bar component 22 may be two separate components, the battery cell 20 may be fixedly connected to the insulating member 12 by adhesion or the like, and the bus bar component 22 is then fixedly connected to the electrode terminal 21 of the battery cell 20 by welding or the like through the first through hole 1231.

In a possible implementation, as shown in FIG. 12, the insulating member 12 and the bus bar component 22 may be previously prepared as an integral connecting assembly 13, and then the connecting assembly 13 may be arranged on the surface of the battery cell 20 as a whole during the assembly process. In the connecting assembly 13, the bus bar component 22 corresponds to two adjacent first through holes 1231, and when the connecting assembly 13 is fixedly connected to the battery cell 20, the two adjacent first through holes 1231 correspond to the electrode terminals 21 of different battery cells 20. The plurality of battery cells 20 are assembled together by the connecting assembly 13, it is possible to simplify the assembling process and improve the assembling efficiency while improving the overall rigidity of the battery 10.

The bus bar component 22 is connected to the electrode terminal 21 through the first through hole 1231, so that an electrical connection between the plurality of battery cells 20 can be achieved without affecting the insulation performance between the battery cells 20 and other portions of the battery 10.

According to some embodiments of the present application, optionally, a surface of the insulating member 12 away from the battery cell 20 at least partially protrudes from a surface of the bus bar component 22 away from the battery cell 20.

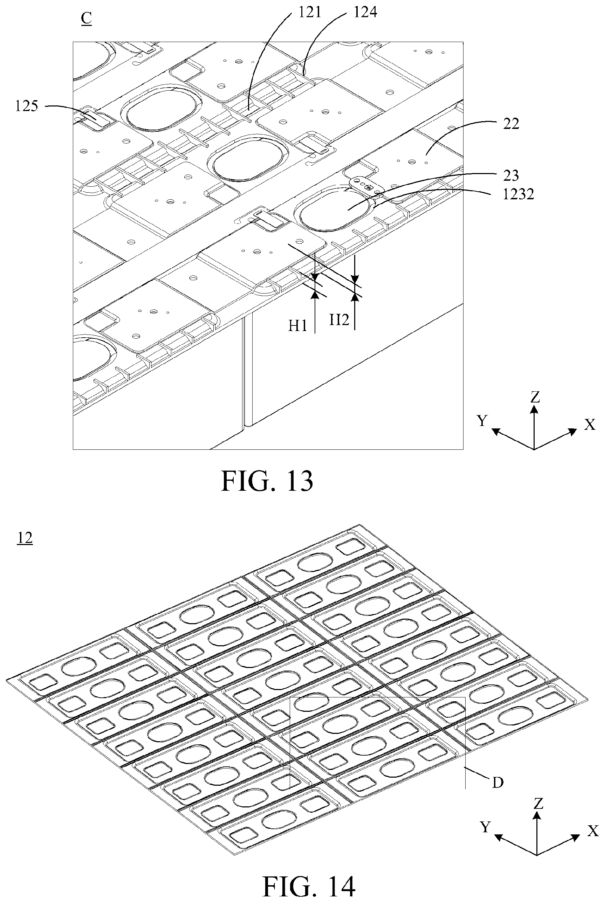

FIG. 13 shows an enlarged schematic structural diagram of a portion C in FIG. 11. As shown in FIG. 13, the surface of the insulating member 12 away from the battery cell 20 refers to the surface of the insulating member 12 on a side away from the battery cell 20 in the third direction Z, and the surface of the bus bar component 22 away from the battery cell 20 refers to the surface of the bus bar component 22 on a side not connected to the electrode terminal 21 in the third direction Z.

The insulating member 12 includes a first insulating portion 121 and a second insulating portion 122, optionally may include a connecting portion 123, and optionally may further include a reinforcing structure 124. These structures on the insulating member 12 may cause the thickness of the insulating member 12 to vary at different positions, and in the embodiment of the present application, the surface of the insulating member 12 away from the battery cell 20 in the third direction Z at least partially protrudes from the surface of the bus bar component 22 away from the battery cell 20. It can be seen in connection with FIG. 13 that at least a part of the insulating member 12 is higher than the plane of the bus bar component 22.

Optionally, a relationship between the surface of the insulating member 12 away from the battery cell 20 and the surface of the bus bar component 22 away from the battery cell 20 may also be reflected by the distance between the insulating member 12 and the surface of the battery cell 20 facing the insulating member 12 at different positions.

As shown in FIG. 13, taking an example in which the reinforcing structure 124 is the highest point of the insulating member 12 protruding from the surface of the insulating member 12 away from the battery cell 20, the maximum distance between the surface of the insulating member 12 away from the battery cell 20 and the surface of the battery cell 20 facing the insulating member 12 is H1. It should be understood that in the case where there is a region on the insulating member 12 higher than the reinforcing structure 124, H1 refers to a distance between a position on the insulator 12 farthest from the battery cell 20 in the third direction Z and a surface of the battery cell 20 adjacent to the insulating member 12.

Similarly, there may be some structures on the bus bar component 22, such that the bus bar component 22 has a different thickness at different positions. As shown in FIG. 13, taking an example in which the region on the bus bar component 22 connected to the electrode terminal 21 is farthest from the surface of the battery cell 20 facing the insulating member 12, the maximum distance between the surface of the bus bar component 22 away from the battery cell 20 and the surface of the battery cell 20 facing the insulating member 12 is H2. It should be understood that H2 refers to the distance between the position of the bus bar component 22 farthest from the battery cell 20 in the third direction Z and the surface of the battery cell 20 adjacent to the insulating member 12.

In the embodiment of the present application, H1>H2, that is, there exists at least a part of the region on the surface of the insulating member 12 away from the battery cell 20 is higher than the surface of the bus bar component 22 away from the battery cell 20, the bus bar component 22 is less likely to be in contact with the wall of the case 11 than the insulating member 12 in the battery 10.

In a possible implementation, a portion of the insulating member 12 protruding from a surface of the bus bar component 22 away from the battery cell 20 may be connected to the inner wall of the case 11, for example, the insulating member 12 may abut against or adhered to the inner wall of the case 11. Since at least a part of the insulating member 12 protrudes from the surface of the bus bar component 22 away from the battery cell 20, the bus bar component 22 is less likely to be in contact with the inner wall of the case 11 in the case where the insulating member 12 is connected to the inner wall of the case 11.

As a result, the probability that the bus bar component 22 is in contact with the wall of the case 11 of the battery 10 to charge the case 11 may be reduced, which contributes to improving the insulation effect of the insulating member 12, reducing the risk of the short circuit of the battery cell 20, and improving the reliability of the battery 10.

According to some embodiments of the present application, optionally, the insulating member 12 includes a sampling assembly 125, and the sampling assembly 125 is arranged on the first insulating portion 121 and/or the second insulating portion 122.

The sampling assembly 125 is configured to sample a signal of the battery cell 20, for example, the sampling assembly 125 may be configured to obtain parameters such as voltage and current of the battery cell 20, and optionally, the sampling assembly 125 may also be configured to obtain parameters such as temperature and expansion force of the battery cell 20. The sampling assembly 125 may include a flexible circuit board, a printed circuit board, a wire, and the like.

In some embodiments, the sampling assembly 125 may be arranged on the first insulation portion 121 to sample parameters of the battery cells 20 located on both sides of the first insulating portion 121 in the second direction Y. This is shown in FIG. 11 to FIG. 13. In this case, the sampling assembly 125 may be integrated with the first insulating portion 121 in the insulating member 12 without additionally arranging a carrier member for the sampling assembly 125.

In some embodiments, the sampling assembly 125 may be arranged on the second insulation portion 122 to sample parameters of the battery cells 20 located on both sides of the first insulating portion 122 in the first direction X. In this case, the sampling assembly 125 may be integrated with the second insulating portion 122 in the insulating member 12 without additionally arranging a carrier member for the sampling assembly 125.

In some embodiments, the sampling assembly 125 may be arranged on both the first insulating portion 121 and the second insulating portion 122 to sample parameters of the battery cell 20 located on both sides of the first insulating portion 121 and the second insulating portion 122 in the first direction X and the second direction Y. Optionally, the sampling assembly 125 may be integrated with the first insulating portion 121 and the second insulating portion 122 in the insulating member 12.

In a possible implementation, the sampling assembly 125, the bus bar component 22, and the insulating member 12 may be separate components which are assembled with the battery cell 20 during the assembly process; in another possible implementation, the insulating member 12 and the bus bar component 22 are assembled with the battery cell 20 as a whole, and the sampling assembly 125 is assembled as a separate component; and in another possible implementation, the connecting assembly 13 may include the sampling assembly 125, i.e., the connecting assembly 13 may include the sampling assembly 125, the insulating member 12, and the bus bar component 22, i.e., the sampling assembly 125, the insulating member 12, and the bus bar component 22 may be prepared in advance as an integral connecting assembly 13, and the connecting assembly 13 as a whole is arranged on the surface of the battery cell 20 during the assembly process. The plurality of battery cells 20 are assembled together by the connecting assembly 13, it is possible to simplify the assembling process and improve the assembling efficiency while improving the overall rigidity of the battery 10.

In a case where there are more battery cells 20, the arrangement of the sampling assembly 125 on the insulating member 12 may increase the degree of integration of the sampling assembly 125 and the insulating member 12, which can improve the production efficiency and reduce the production cost of the sampling assembly 125.

According to some embodiments of the present application, optionally, the sampling assembly 125 is close to the electrode terminal 21.

The sampling member 125 may be arranged at a position of the first insulating portion 121 and/or the second insulating portion 122 close to the electrode terminal 21, for example, may be arranged on an edge of the first insulating portion 121 and/or the second insulating portion 122 close to the electrode terminal 21. In some embodiments, the sampling assembly 125 may be connected to the bus bar component 22. Optionally, a groove may be formed in the bus bar component 22, and an accommodating space formed by the groove is configured to accommodate at least a part of the sampling assembly 125. Thus, the electrical connection between the battery cells 20 will not be affected while the parameters of the battery cells 20 are sampled.

Thus, it contributes to sampling the related parameters of the battery cell 20 by the sampling assembly 125, and at the same time, the accuracy of the parameters of the battery cell 20 acquired by the sampling assembly 125 may also be improved.

According to some embodiments of the present application, optionally, a first blocking portion 1261 is arranged around the first through hole 1231, and the first blocking portion 1261 protrudes from a surface of the insulating member 12 facing the battery cell 20.

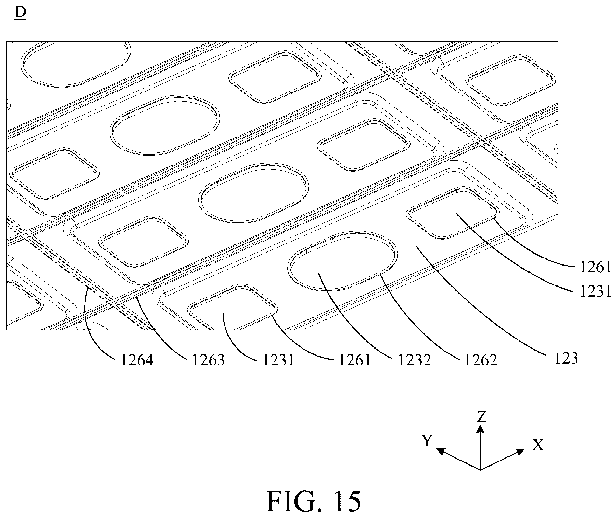

FIG. 14 shows a schematic structural diagram of an insulating member 12 according to an embodiment of the present application, and specifically, FIG. 14 shows a surface structure of the insulating member 12 facing a battery cell 20. FIG. 15 is an enlarged schematic structural diagram of a portion D in FIG. 14.

The first blocking portion 1261 is arranged around the first through hole 1231, protrudes from a surface of the insulating member 12 facing the battery cell 20, and specifically, may protrude from a surface of the connecting portion 123 facing the battery cell 20. For example, the first blocking portion 1261 may be annular and surround the first through hole 1231, and optionally, the first blocking portion 1261 may surround the first through hole 1231 along an edge of the first through hole 1231. Optionally, the side wall of an inner ring of the first blocking portion 1261 may be coplanar with the hole wall of the first through hole 1231. In a possible implementation, a first blocking portion 1261 may be arranged around each first through hole 1231. Optionally, the first blocking portion 1261 may be integrally molded with the insulating member 12. Optionally, the first blocking portion 1261 may be a sealing tape or foam glue arranged on the surface of the insulating member 12 facing the battery cell 20.

In some embodiments, the surface of the insulating member 12 facing the battery cell 20 may be coated with an adhesive material to achieve adhesion of the insulating member 12 to the battery cell 20, and the first blocking portion 1261 may restrict the flow of the adhesive material to the first through hole 1231, thereby reducing the probability that the adhesive material attached to the surface of the connection part 123 is in contact with the electrode terminal 21 in the first through hole 1231. In some embodiments, the first blocking portion 1261 can play a certain role in blocking solid particles, for example, the first blocking portion 1261 can reduce the probability that metal particles are in contact with the electrode terminal 21, thereby reducing the probability of a short circuit of the battery 10.

The first blocking portion 1261 may reduce the probability that the adhesive material attached to the surface of the connecting portion 123 is in contact with the electrode terminal 21, and thus can reduce the influence of the adhesive material on the connection between the bus bar component 22 and the electrode terminal 21. At the same time, the first blocking portion 1261 can play a certain role in blocking solid particles, particularly, metal particles, and thus, the probability of a short circuit of the battery 10 can be reduced, and the reliability of the battery 10 can be improved.

According to some embodiments of the present application, optionally, the first blocking portion 1261 abuts against a surface of the battery cell 20 facing the insulating member 12.

In the third direction Z, the surface of the first blocking portion 1261 facing the battery cell 20 is in contact with the surface of the battery cell 20 facing the insulating member 12. Optionally, the first blocking portion 1261 may be made of an elastic material, and may be subjected to a certain compression during the assembly process of the battery 10 to improve the sealing degree between the first blocking portion 1261 and the battery cell 20, thereby improving the blocking effect of the first blocking portion 1261 on the adhesive material or the solid particles.

The first blocking portion 1261 abuts against the surface of the battery cell 20, which may improve the sealing effect of the first blocking portion 1261 on the surrounding area of the first through hole 1231 to further block the adhesive material or the solid particles, so that the influence of the adhesive material on the connection between the bus bar component 22 and the electrode terminal 21 is reduced, and at the same time, the solid particles, particularly the metal particles, can be further blocked, so that the probability of the short circuit of the battery 10 can be reduced, and the reliability of the battery 10 can be improved.

According to some embodiments of the present application, optionally, a second blocking portion 1262 is arranged around the second through hole 1232, and the second blocking portion 1262 protrudes from a surface of the insulating member 12 facing the battery cell 20.

As shown in FIG. 14 and FIG. 15, the second blocking portion 1262 is arranged around the second through hole 1232, protrudes from a surface of the insulating member 12 facing the battery cell 20, and specifically, may protrude from a surface of the connecting portion 123 facing the battery cell 20. For example, the second blocking portion 1262 may be annular and surround the first through hole 1231, and optionally, the second blocking portion 1262 may surround the second through hole 1232 along an edge of the second through hole 1232. Optionally, the side wall of the inner ring of the second blocking portion 1262 may be coplanar with the hole wall of the second through hole 1232. In a possible implementation, a second blocking portion 1262 may be arranged around each second through hole 1232. Optionally, the second blocking portion 1262 may be integrally molded with the insulating member 12. Optionally, the second blocking portion 1262 may be a sealing tape or foam glue arranged on the surface of the insulating member 12 facing the battery cell 20.

In some embodiments, the surface of the insulating member 12 facing the battery cell 20 may be coated with an adhesive material to achieve adhesion of the insulating member 12 to the battery cell 20, and the second blocking portion 1262 may restrict the flow of the adhesive material to the second through hole 1232, thereby reducing the probability that the adhesive material attached to the surface of the connecting portion 123 is in contact with the pressure relief mechanism 23 in the second through hole 1232. In some embodiments, the second blocking portion 1262 can play a certain role in blocking solid particles, for example, the second blocking portion 1262 can reduce the probability that the solid particles are in contact with the pressure relief mechanism 23, thereby reducing the probability of damage to the pressure relief mechanism 23.

The second blocking portion 1262 may play a role in protecting the pressure relief mechanism 23 in the second through hole 1232, can play a role in restricting the flow of the adhesive material to the pressure relief mechanism 23 to reduce the probability that the adhesive material attached to the surface of the insulating member 12 is in contact with the pressure relief mechanism 23 and reduce the probability that the pressure relief mechanism 23 is hardly actuated as it is adhered, thereby improving the reliability of the battery 10. At the same time, the second blocking portion 1262 can play a certain role in blocking solid particles, which can reduce the probability of damage to the pressure relief mechanism 23 and improve the reliability of the battery 10.

According to some embodiments of the present application, optionally, the second blocking portion 1262 abuts against a surface of the battery cell 20 facing the insulating member 12.

**In** the third direction Z, the surface of the second blocking portion 1262 facing the battery cell 20 is in contact with the surface of the battery cell 20 facing the insulating member 12. Optionally, the second blocking portion 1262 may be made of an elastic material, and may be subjected to a certain compression during the assembly process of the battery 10 to improve the sealing degree between the second blocking portion 1262 and the battery cell 20, thereby improving the blocking effect of the second blocking portion 1262 on the adhesive material or the solid particles.

The second blocking portion 1262 abuts against the surface of the battery cell 20, which may improve the sealing effect of the second blocking portion 1262 on the surrounding area of the second through hole 1232 to further block the adhesive material or the solid particles, thereby reducing the influence of the adhesive material or fixed particles on the pressure release mechanism 23 and improving the reliability of the battery 10.

According to some embodiments of the present application, optionally, the first insulating portion 121 is provided with a third blocking portion 1263, and the third blocking portion 1263 protrudes from a surface of the first insulating portion 121 facing the battery cell 20 and extending along the first direction X; and/or,

the second insulating portion 122 is provided with a fourth blocking portion 1264, and the fourth blocking portion 1264 protrudes from a surface of the second insulating portion 122 facing the battery cell 20 and extends along the second direction Y.

As shown in FIG. 14 and FIG. 15, the third blocking portion 1263 may protrude from a surface of the first insulating portion 121 facing the battery cell 20. The third blocking portion 1263 may extend along the first direction X, and optionally, a size of the third blocking portion 1263 in the first direction X may be the same as a size of the first insulating portion 121 in the first direction X. Optionally, the third blocking portion 1263 may be integrally molded with the insulating member 12. Optionally, the third blocking portion 1263 may be a sealing tape or foam glue arranged on the surface of the insulating member 12 facing the battery cell 20. The third blocking portion 1263 is configured to restrict the flow of the adhesive material coated on the insulating material 12 to the gap between the two adjacent battery cells 20 in the second direction Y, and reduce the influence of the adhesive material attached to the surface of the insulating material 12 on the adhesion effect between the insulating material 12 and the battery cells 20 by flowing to the gap between the battery cells 20. In addition, the third blocking portion 1263 may also play a certain role in blocking the solid particles to reduce the probability that the solid particles fall into the gap between the two adjacent battery cells 20 in the second direction Y, thereby reducing the probability that the solid particles damage the battery cells 20, thereby improving the reliability of the battery 10.

The fourth blocking portion 1264 may protrude from a surface of the second insulating portion 122 facing the battery cell 20. The fourth blocking portion 1264 may extend along the second direction Y, and optionally, a size of the fourth blocking portion 1264 in the second direction Y may be the same as a size of the second insulating portion 122 in the second direction Y. Optionally, the fourth blocking portion 1264 may be integrally molded with the insulating member 12. Optionally, the fourth blocking portion 1264 may be a sealing tape or foam glue arranged on the surface of the insulating member 12 facing the battery cell 20. The fourth blocking portion 1264 is configured to restrict the flow of the adhesive material coated on the insulating material 12 to the gap between the two adjacent battery cells 20 in the first direction X, and reduce the influence of the adhesive material attached to the surface of the insulating material 12 on the close arrangement between the battery cells 20 by flowing to the gap between the battery cells 20. In addition, the fourth blocking portion 1264 may also play a certain role in blocking the solid particles to reduce the probability that the solid particles fall into the gap between the two adjacent battery cells 20 in the first direction X, thereby reducing the probability that the solid particles damage the battery cells 20, thereby improving the reliability of the battery 10.

In some embodiments, the third blocking portion 1263 may be arranged only on the first insulating portion 121; optionally, the fourth blocking portion 1264 may be arranged only on the second insulating portion 122; optionally, the third blocking portion 1263 may be arranged on the first insulating portion 121 and the fourth blocking portion 1264 may be arranged on the second insulating portion 122.

The third blocking portion 1263 and/or the fourth blocking portion 1264 may play a role in protecting the gap between adjacent battery cells 20 and can restrict the flow of the adhesive material to the gap between the battery cells 20, which contributes to achieving the close arrangement of the battery cells 20. Thus, the influence of the adhesive material on swelling deformation of the battery cells 20 can also be reduced, and the service life of the battery 10 is prolonged. In addition, the third blocking portion 1263 and/or the fourth blocking portion 1264 may also play a certain role in blocking the solid particles to reduce the probability that the solid particles fall into the gap between two adjacent battery cells 20, so as to further reduce the probability that the solid particles damage the battery cells 20, so that the reliability of the battery 10 is improved.

According to some embodiments of the present application, optionally, the third blocking portion 1263 and/or the fourth blocking portion 1264 abut against a surface of the battery cell 20 facing the insulating member 12.

In the third direction Z, a surface of the third blocking portion 1263 and/or the fourth blocking portion 1264 facing the battery cell 20 is in contact with a surface of the battery cell 20 facing the insulating member 12. Optionally, the third blocking portion 1263 and/or the fourth blocking portion 1264 may be made of an elastic material, and may be subjected to a certain compression during the assembly process of the battery 10 to improve the sealing degree between the second blocking portion 1262 and the battery cell 20, thereby improving the blocking effect of the second blocking portion 1262 on the adhesive material or the solid particles.

The third blocking portion 1263 and/or the fourth blocking portion 1264 abut against the surface of the battery cell 20, which may improve the sealing effect of the third blocking portion 1263 and/or the fourth blocking portion 1264 on the gap between two adjacent battery cells 20 to further play a role in blocking the adhesive material or solid particles, thereby reducing the influence of the adhesive material or fixed particles on the battery cell 20 and improving the reliability of the battery 10.

According to some embodiments of the present application, optionally, a projection of the third blocking portion 1263 in the third direction Z covers the gap between two adjacent battery cells 20 arranged along the second direction Y, where the third direction Z is perpendicular to the first direction X and the second direction Y; and/or a projection of the fourth blocking portion 1264 in the third direction Z covers the gap between two adjacent battery cells 20 arranged along the first direction X, where the third direction Z is perpendicular to the first direction X and the second direction Y.

The third blocking portion 1263 is arranged on the first insulating portion 121, and in the case where the first insulating portion 121 is configured to be connected to two adjacent battery cells 20 arranged along the second direction Y, the projection of the third blocking portion 1263 in the third direction Z covers the gap between two adjacent battery cells 20 arranged along the second direction Y to block the gap between two adjacent battery cells 20 arranged along the second direction Y, and even if the adhesive material on the insulating member 12 flows around as it is pressed, the third blocking portion 1263 protruding from the insulating member 12 may also restrict the flow of the adhesive material, thereby reducing the probability that the adhesive material flows to the gap. In addition, the probability that the solid particles fall into the gap between two adjacent battery cells 20 in the second direction Y may further be reduced, and the probability that the solid particles damage the battery cells 20 is further reduced, thereby improving the reliability of the battery 10.

Similarly, the fourth blocking portion 1264 is arranged on the second insulating portion 122, and in the case where the second insulating portion 122 is configured to be connected to two adjacent battery cells 20 arranged along the first direction X, the projection of the fourth blocking portion 1264 in the third direction Z covers the gap between two adjacent battery cells 20 arranged along the first direction X to block the gap between two adjacent battery cells 20 arranged along the first direction X, and even if the adhesive material on the insulating member 12 flows around as it is pressed, the fourth blocking portion 1264 protruding from the insulating member 12 may also restrict the flow of the adhesive material, thereby reducing the probability that the adhesive material flows to the gap. In addition, the probability that the solid particles fall into the gap between two adjacent battery cells 20 in the first direction X may further be reduced, and the probability that the solid particles damage the battery cells 20 is further reduced, thereby improving the reliability of the battery 10.

In some embodiments, only the third blocking portion 1263 may block the gap between the battery cells 20; optionally, only the fourth blocking portion 1264 may block the gap between the battery cells 20; and alternatively, both the third blocking portion 1263 and the fourth blocking portion 1264 may be configured to block the gap between the battery cells 20.

The third blocking portion 1263 and/or the fourth blocking portion 1264 can restrict the flow of the adhesive material to the gap between the battery cells 20 by covering the gap between the battery cells 20, which contributes to achieving the close arrangement of the battery cells 20. Thus, the influence of the adhesive material on swelling deformation of the battery cells 20 can also be reduced, and the service life of the battery 10 is prolonged. In addition, the probability that the solid particles fall into the gap between two adjacent battery cells 20 may further be reduced, and the probability that the solid particles damage the battery cells 20 is further reduced, thereby improving the reliability of the battery 10.

According to some embodiments of the present application, optionally, at least a part of the third blocking portion 1263 extends into the gap between two adjacent battery cells 20 arranged in the second direction Y; and/or at least a part of the fourth blocking portion 1264 extends into the gap between two adjacent battery cells 20 arranged in the first direction X.

In a possible implementation, a certain gap may be reserved between two adjacent battery cells 20 arranged in the second direction Y, and at least a part of the third blocking portion 1263 may be filled into the gap; and in another possible implementation, the third blocking portion 1263 may be pressed, such that at least a part of the third blocking portion 1263 extends into the gap between two adjacent battery cells 20 arranged in the first direction X.

As a result, it may further play a role in blocking the adhesive material or solid particles to further reduce the influence of the adhesive material or fixed particles on the battery cell 20 entering into the gap between the adjacent battery cells 20, thereby improving the reliability of the battery 10.

According to some embodiments of the present application, optionally, the first insulating portion 121 is provided with two spaced third blocking portions 1263, projections of the two third blocking portions 1263 in the third direction Z are located on both sides of the gap between adjacent two battery cells 20 arranged along the second direction Y, and the third direction Z is perpendicular to the first direction X and the second direction Y; and/or,
the second insulating portion 122 is provided with two spaced fourth blocking portions 1264, projections of the two fourth blocking portions 1264 in the third direction Z are located on both sides of the gap between adjacent two battery cells 20 arranged along the first direction X, and the third direction Z is perpendicular to the first direction X and the second direction Y.

The third blocking portion 1263 may restrict the adhesive material or solid particles from entering into the gap between two adjacent battery cells 20, where the two adjacent battery cells 20 may be arranged along the second direction Y. Specifically, the first insulating portion 121 may be provided with two third blocking portions 1263, and optionally, the two third blocking portions 1263 may be arranged in parallel. The projections of the two third blocking portions 1263 in the third direction Z are located on both sides of the gap between the two battery cells 20, so that the two third blocking portions 1263 may restrict the adhesive material or the fixed particles from both sides of the gap, respectively, thereby reducing the probability that the adhesive material or the solid particles enter the gap.

Similarly, the fourth blocking portion 1264 may also restrict the adhesive material or the solid particles from entering into the gap from both sides of the gap between two adjacent battery cells 20 arranged in the first direction X. Specifically, the second insulating portion 122 may be provided with two fourth blocking portions 1264, and optionally, the two fourth blocking portions 1264 may be arranged in parallel on both sides of the gap between two adjacent battery cells 20 arranged in the first direction X, so that the adhesive material or the solid particles may be respectively restricted from both sides of the gap, thereby reducing the probability that the adhesive material or the solid particles enter the gap.

In some embodiments, two third blocking portions 1263 may be arranged only on the first insulating portion 121; optionally, two fourth blocking portions 1264 may be arranged only on the second insulating portion 122; optionally, both the third blocking portions 1263 and the fourth blocking portions 1264 may be arranged on the insulating member 12, so that the gaps between the battery cells 20 arranged in the first direction X and the second direction Y can be protected.

The third blocking portion 1263 and/or the fourth blocking portion 1264 can restrict the adhesive material or the solid particles from entering into the gap at both sides of the gap of the battery cell 20, which contributes to reducing the probability that the adhesive material or the solid particles enter into the gap, so as to achieve the close arrangement between the battery cells 20. Thus, the influence of the adhesive material or the solid particles on the swelling deformation of the battery cell 20 can also be reduced, and the service life of the battery 10 is prolonged. At the same time, the arrangement of the blocking portions on both sides of the gap between the battery cells 20 can also reduce a material required for the blocking portions, reduce the production cost, and reduce the weight of the battery 10.

According to some embodiments of the present application, optionally, at least a part of the insulating member 12 is made of a transparent material. Optionally, the first insulating portion 121 and/or the second insulating portion 122 are made of a transparent material. The transparent material may include, for example, polycarbonate (PC), polyhexamethylene adipamide (PA66), polyadiohexylenediamine, polymethyl methacrylate (PMMA), glass fibers, glass, and the like.

According to some embodiments of the present application, light transmittance of the first insulating portion 121 and/or the second insulating portion 122 may be 20% to 100%. The light transmittance refers to a percentage of a light flux transmitted through an object to an incident light flux thereof, and the light transmittance of an object may be generally measured using a spectrophotometer.

Optionally, the light transmittance of the first insulating portion 121 and/or the second insulating portion 122 may be 20%, 30%, 40%, 50%, 60%, 70%, 80%, 90%, 100%.

The first insulating portion 121 may be made of a transparent material, where the transparent material may refer to a material having light transmittance of 20% to 100%. The transparent material allows light to pass through the first insulating portion 121 from one side of the first insulating portion 121 to the other side of the first insulating portion 121, and in the embodiment of the present application, the transparent material may allow the light to pass through the first insulating portion 121 from one side to the other side in the third direction Z. Optionally, the second insulating portion 122 may also be made of a transparent material; and optionally, both the first insulating portion 121 and the second insulating portion 122 may be made of a transparent material.

It is beneficial to observe a situation from one side the other side due to the transparent material, for example, in the process of coating the adhesive material, the specifically coated position may be observed through a transparent portion, and for another example, the flowing condition of the adhesive material in the process that the insulating member 12 is adhered to the battery cell 20 may be observed through the transparent portion, and the process may be timely adjusted in case of more or few adhesive material coated, so that the percentage of pass of the production process of the battery 10 is improved.

In an assembly process, the first insulating portion 121 and/or the second insulating portion 122 are made of a material having light transmittance of 20% to 100% to facilitate observation and control of the assembly process, so that adjustments can be made in time to improve the percent of pass in the battery 10 production process.

According to some embodiments of the present application, optionally, the battery 10 further includes an adhesive layer, configured to adhere the insulating member 12 and the battery cell 20.

The insulating member 12 may be fixedly connected to the battery cell 20 by way of adhesion, and specifically, the insulating member and/or the battery cell may be adhered to each other by coating the adhesive material on the surface of the insulating member 12 and/or the battery cell 20, and the structure formed by the adhesive material is an adhesive layer.

The adhesive layer can enable a fixed connection of the insulating member 12 to the battery cell 20, so that an insulating failure due to separation of the battery cell 20 from the insulating member 12 is avoided. At the same time, the adhesive layer can fix the relative positions among the plurality of battery cells 20 through the insulating member 12, so that a danger due to mutual collision of the battery cells 20 in the battery 10 is avoided.

According to some embodiments of the present application, optionally, a material of the adhesive layer is a photosensitive adhesive.

The photosensitive adhesive refers to a type of adhesive material that may be solidified quickly by absorbing light with a specific wavelength, for example, ultraviolet rays (UV) glue may be converted from a liquid to a solid within a short time after absorbing ultraviolet light under irradiation of the ultraviolet light.

In some embodiments, at least a part of the region on insulating member 12 may be made of a transparent material, which may be, for example, a material having light transmission in the range of 20% to 100%. The photosensitive adhesive may be coated on one side surface of the region of the transparent material, for example, the surface facing the battery cell 20, and light corresponding to the photosensitive adhesive may pass through the transparent material from the other side surface of the transparent material and act on the photosensitive adhesive, which absorbs energy in the corresponding light and solidifies.

The photosensitive adhesive can accelerate a solidification process by illumination, reduce the manufacturing time of the battery 10, and improve the manufacturing efficiency.

According to some embodiments of the present application, optionally, the battery 10 includes a first case portion 111 and a second case portion 112. The first case portion 111 is of a hollow structure having an opening, the plurality of battery cells 20 are accommodated in the hollow structure, the second case portion 112 and the first case portion 111 cover each other, and the second case portion 112 is fixedly connected to the insulating member 12.

The first case portion 111 accommodates the plurality of battery cells 20, and in some embodiments, the insulating member 12 may be arranged on a surface of the battery cell 20 facing the opening of the first case portion 111. Optionally, the surface of the battery cell 20 on which the electrode terminal 21 is arranged may face the opening of the first case portion 111.

The second case portion 112 may cover the first case portion 111 at an opening at one end of the first case portion 111, and optionally, in a case where the first case portion 111 is opened at both ends, the second case portion 112 may be cover the first case portion 111 from the openings at both ends. In the case that the second case portion 112 covers the first case portion 111, the second cover portion may be fixedly connected to a structure accommodated in the first case portion 111. In some embodiments, the second case portion 112 may be fixedly connected to the insulating member 12 accommodated in the first case portion 111 in the case that the second case portion covers the first case portion 111. For example, an adhesive material may be coated on the surface of the second case portion 112 facing the hollow structure of the first case portion 111, and the second case portion 112 may be fixedly connected to the insulating member 12 by the adhesive material in the case that the second case portion covers the first case portion 111; and optionally, an adhesive material may be coated on the surface of the insulating member 12 facing the second case portion 112 to achieve the fixed connection between the insulating member 12 and the second case portion 112.

The second case portion 112 can further fix the position of the battery cell 20 in the battery 10 by being fixedly connected to the insulating member 12, so that the sway of the battery cell 20 in the first case portion 111 is reduced, and the probability that the battery cell 20 is damaged due to the collision in the battery 10 is reduced, thereby improving the reliability of the battery 10.

According to some embodiments of the present application, optionally, the second case portion 112 is adhesively fixed to the insulating member 12.

The second case portion 112 and the insulating member 12 may be fixedly connected by coating the adhesive material, for example, the second case portion 112 and the insulating member 12 may be fixedly connected by foam glue. There is a certain gap between the second case portion 112 and the insulating material 12, and the foam glue can be filled between the second case portion 112 and the insulating material 12 by way of glue filling, so as to adhesively fix the second case portion 112 and the insulating material 12. When the foam glue is coated on the surface, the foam glue may have a certain thickness, so as to fill the gap between the second case portion 112 and the insulating member 12, thereby improving the adhesive strength between the second case portion 112 and the insulating member 12. Furthermore, the foam glue has the characteristic of low density, and the connection between the second case portion 112 and the insulating member 12 by using the foam glue may also improve the shock resistance of the battery 10.

An embodiment of the present application provides an electric device, including the battery 10 in any one of the above embodiments, and the battery 10 is configured to supply electric energy to the electric device.

An embodiment of the present application provides a battery 10, including a plurality of battery cells 20, an insulating member 12, a bus bar component 22, and a case 11, where the insulating member 12 is fixedly connected to the plurality of battery cells 20 and accommodated in the case 11, and the bus bar component 22 is connected to electrode terminals 21 of two adjacent battery cells 20 to achieve an electrical connection between the battery cells 20. The insulating member 12 includes a first insulating portion 121 extending along the first direction X, a second insulating portion 122 extending along the second direction Y, and a connecting portion 123 connecting the first insulating portion 121 and the second insulating portion 122, where the first insulating portion 121 is fixedly connected to the plurality of battery cells 20 arranged along the first direction X and the second insulating portion 122 is fixedly connected to the plurality of battery cells 20 arranged along the second direction Y. The connecting portion 123 is provided with a first through hole 1231 and a second through hole 1232, the first through hole 1231 is configured to avoid the electrode terminal 21 of the battery cell 20, the second through hole 1232 is configured to avoid the pressure releasing mechanism 23 of the battery cell 20, a first blocking portion 1261 is arranged around the first through hole 1231, a second blocking portion 1262 is arranged around the second through hole 1232, a third blocking portion 1263 is arranged around a first insulating portion 121, and a second insulating portion 122 is provided with a fourth blocking portion 1264. The insulating member 12 may be of an integrally molded structure, and a sampling assembly 125 may be integrated on the insulating member 12 to collect parameters of the battery cell 20.

Although this application has been described with reference to some preferred embodiments, various modifications to this application and replacements of the components therein with equivalents can be made without departing from the scope of this application. In particular, the technical features mentioned in the embodiments may be combined in any manner provided that there is no structural conflict. The present application is not limited to the specific embodiments disclosed herein, but includes all technical solutions falling within the scope of the claims.

## Claims

1. A battery, comprising:
a plurality of battery cells (20) arranged in a matrix along a first direction (X) and a second direction (Y), the first direction (X) being perpendicular to the second direction (Y); and
an insulating member (12), comprising a first insulating portion (121) extending along the first direction (X) and a second insulating portion (122) extending along the second direction (Y), wherein the first insulating portion (121) is fixedly connected to the plurality of battery cells (20) arranged along the first direction (X), and the second insulating portion (122) is fixedly connected to the plurality of battery cells (20) arranged along the second direction (Y).

2. The battery according to claim 1, wherein
the first insulating portion (121) is fixedly connected to two adjacent battery cells (20) arranged along the second direction (Y), and/or
the second insulating portion (122) is fixedly connected to two adjacent battery cells (20) arranged along the first direction (X).

3. The battery according to claim 1 or 2, wherein the first insulating portion (121) and the second insulating portion (122) are fixedly connected.

4. The battery according to claim 3, wherein
the first insulating portion (121) is provided with a first groove (131), and the first groove (131) is clamped with the second insulating portion (122); and/or
the second insulating portion (122) is provided with a second groove (132), and the second groove (132) is clamped with the first insulating portion (121).

5. The battery according to claim 1 or 2, wherein
the insulating member (12) is of an integrally molded structure.

6. The battery according to any one of claims 1 to 5, wherein
the insulating member (12) comprises a connecting portion (123), and the connecting portion (123) is configured to connect the first insulating portion (121) and the second insulating portion (122) on a plane formed by the first direction (X) and the second direction (Y).

7. The battery according to claim 6, wherein
the battery cell (20) comprises an electrode terminal (21), the connecting portion (123) is provided with a first through hole (1231), and the first through hole (1231) is configured to avoid the electrode terminal (21).

8. The battery according to claim 7, wherein
a first blocking portion (1261) is arranged around the first through hole (1231), and the first blocking portion (1261) protrudes from a surface of the insulating member (12) facing the battery cell (20).

9. The battery according to claim 8, wherein
the first blocking portion (1261) abuts against a surface of the battery cell (20) facing the insulating member (12).

10. The battery according to any one of claims 7 to 9, wherein
the insulating member (12) comprises a bus bar component (22), the bus bar component (22) corresponds to two adjacent first through holes (1231), and the two adjacent first through holes (1231) correspond to electrode terminals (21) of different battery cells (20), respectively.

11. The battery according to claim 10, wherein
a surface of the insulating member (12) away from the battery cell (20) at least partially protrudes from a surface of the bus bar component (22) away from the battery cell (20).

12. The battery according to any one of claims 6 to 11, wherein
the battery cell (20) comprises a pressure relief mechanism (23), the connecting portion (123) is provided with a second through hole (1232), and the second through hole (1232) is configured to avoid the pressure relief mechanism (23).

13. The battery according to claim 12, wherein
a second blocking portion (1262) is arranged around the second through hole (1232), and the second blocking portion (1262) protrudes from a surface of the insulating member (12) facing the battery cell (20).

14. The battery according to any one of claims 1 to 13, wherein
the first insulating portion (121) is provided with a third blocking portion (1263), and the third blocking portion (1263) protrudes from a surface of the first insulating portion (121) facing the battery cell (20) and extends along the first direction (X); and
the second insulating portion (122) is provided with a fourth blocking portion (1264), and the fourth blocking portion (1264) protrudes from a surface of the second insulating portion (122) facing the battery cell (20) and extends along the second direction (Y).

15. The battery according to claim 14, wherein
a projection of the third blocking portion (1263) in a third direction (Z) covers a gap between the two adjacent battery cells (20) arranged along the second direction (Y), the third direction (Z) being perpendicular to the first direction (X) and the second direction (Y); and/or
a projection of the fourth blocking portion (1264) in the third direction (Z) covers a gap between the two adjacent battery cells (20) arranged along the first direction (X), the third direction (Z) being perpendicular to the first direction (X) and the second direction (Y).

16. The battery according to claim 14, wherein
the first insulating portion (121) is provided with two spaced third blocking portions (1263), projections of the two third blocking portions (1263) in the third direction (Z) are located on both sides of the gap between the two adjacent battery cells (20) arranged along the second direction (Y), the third direction (Z) being perpendicular to the first direction (X) and the second direction (Y); and/or
the second insulating portion (122) is provided with two spaced fourth blocking portions (1264), and projections of the two fourth blocking portions (1264) in the third direction (Z) are located on both sides of the gap between the two adjacent two battery cells (20) arranged along the first direction (X), the third direction (Z) being perpendicular to the first direction (X) and the second direction (Y).

17. The battery according to any one of claims 1 to 16, wherein
the insulating member (12) comprises a sampling assembly (125), and the sampling assembly (125) is arranged on the first insulating portion (121) and/or the second insulating portion (122).

18. The battery according to any one of claims 1 to 17, wherein
light transmittance of the first insulating portion (121) and/or the second insulating portion (122) is 20% to 100%.

19. The battery according to any one of claims 1 to 18, further comprising:
an adhesive layer, configured to adhere the insulating member (12) and the battery cell (20).

20. The battery according to claim 19, wherein
a material of the adhesive layer is a photosensitive adhesive.

21. The battery according to any one of claims 1 to 20, further comprising:
a first case portion (111), wherein the first case portion (111) is of a hollow structure having an opening, and a plurality of the battery cells (20) are accommodated in the hollow structure; and
a second case portion (112), wherein the second case portion (112) and the first case portion (111) cover each other, and the second case portion (112) is fixedly connected to the insulating member (12).

22. The battery according to claim 21, wherein
the second case portion (112) is bonded and fixed to the insulating member (12).

23. An electric device, comprising:
the battery (10) according to any one of claims 1 to 22, wherein the battery (10) is configured to provide electric energy to the electric device.
